# EUROPÄISCHE PATENTSCHRIFT

(11) **EP 3 551 786 B1**
(45) Veröffentlichungstag und Bekanntmachung des Hinweises auf die Patenterteilung: **07.04.2021**
(21) Anmeldenummer: 17816393.7
(22) Anmeldetag: 07.12.2017
(51) Int. Cl.: C25F 3/16

(54) **ELEKTROPOLIERVERFAHREN UND ELEKTROLYT HIERZU**
ELECTROPOLISHING METHOD AND ELECTROLYTE FOR SAME
PROCÉDÉ D'ÉLECTROPOLISSAGE ET ÉLECTROLYTE POUR CE PROCÉDÉ

(30) Priorität: 09.12.2016 AT 511192016; 29.08.2017 AT 507162017
(43) Veröffentlichungstag der Anmeldung: 16.10.2019
(73) Patentinhaber: RENA Technologies Austria GmbH, 2552 Hirtenberg (AT)
(72) Erfinder: HANSAL, Wolfgang, 2753 Markt Piesting (AT); HANSAL, Selma, 2753 Markt Piesting (AT); SANDULACHE, Gabriela, 2560 Berndorf (AT)
(74) Vertreter: Schwarz & Partner Patentanwälte OG
(86) Internationale Anmeldenummer: PCT/AT2017/060326
(87) Internationale Veröffentlichungsnummer: WO 2018/102845

(56) Entgegenhaltungen:
- EP-A1- 2 878 713
- DE-B3-102006 047 713
- US-A1- 2011 303 553
- US-A1- 2016 093 898

## Beschreibung

Die Erfindung betrifft einen Elektrolyt zum Elektropolieren von Metalloberflächen, insbesondere von mittels additivem Verfahren aus Metallpulver hergestellten Teilen, wobei der Elektrolyt Methansulfonsäure enthält, sowie ein Verfahren hierzu.

Die additive Fertigung von Metallteilen ("3D-Druck") ist eine relativ neue Technologie, die auf Grund ihrer gegenüber herkömmlichen Fertigungsverfahren erheblich erweiterten Flexibilität im Design von Bauteilen immer häufiger eingesetzt wird. Das Prinzip dieses Fertigungsverfahrens ist, ein schichtweise aufgebrachtes Metallpulver mittels Laser oder Elektronenstrahl gesteuert zu sintern oder zu schmelzen. Am Ende befindet sich der fertige Bauteil eingebettet im Metallpulver.

Die Oberflächen derart gefertigter Bauteile weisen prozessbedingt Welligkeiten und Rauigkeiten auf, die durch die Korngröße des eingesetzten Metallpulvers, durch die für den Aufbau verwendete Schichtdicke und durch die Strahlgeometrie des eingesetzten Energiestrahls bedingt sind. Dieser Umstand erschwert den praktischen Einsatz von derartig hergestellten Teilen in der Technik erheblich. Eine klassische mechanische Nachbearbeitung von 3D-gedruckten Teilen ist in der Regel entweder nicht wirtschaftlich oder auf Grund der komplexen Geometrie des Bauteils praktisch unmöglich durchzuführen.

Elektropolierverfahren gemäß dem Stand der Technik sind zwar geeignet, Rauigkeiten im einstelligen bis zum niedrigen zweistelligen Mikrometerbereich einzuebnen (der Abtrag beträgt hier typischerweise 10 µm bis 40 µm), scheitern aber regelmäßig an den im 3D-Druck auftretenden Rauigkeiten, die bis in den Zehntelmillimeterbereich hineinreichen.

Die DE 10 2006 053 586 B3 beschreibt ein derartiges Elektropolierverfahren, bei dem ein Elektrolyt der eingangs erwähnten Art eingesetzt wird.

Es ist daher Aufgabe der Erfindung, die Nachteile der bekannten Elektropolierverfahren zu beseitigen und insbesondere einen Elektrolyten bereitzustellen, der eine Oberflächenbehandlung von mittels additivem Verfahren aus Metallpulver hergestellten Teilen erlaubt.

Diese Aufgabe wird erfindungsgemäß durch einen Elektrolyten der eingangs erwähnten Art dadurch gelöst, dass zusätzlich zumindest eine Phosphonsäure in dem Elektrolyten enthalten ist.

Der erfindungsgemäße Elektrolyt ist in der Lage, die großen Rauigkeiten, die beim 3D-Druck prozessbedingt entstehen, einzuebnen. Selbstverständlich kann der erfindungsgemäße Elektrolyt auch in der Nachbearbeitung von konventionell hergestellten Metallbauteilen eingesetzt werden. Er ist vor allem für die Nachbearbeitung von Bauteilen aus Titanlegierungen geeignet, bei geeigneter Variation der Zusammensetzung ist auch die Bearbeitung von Aluminiumlegierungen möglich.

Erfindungsgemäß ist hierbei vorgesehen, dass die zumindest eine Phosphonsäure aus einer Gruppe gewählt ist, die Mono-, Di-, und/oder Polyphosphonsäuren, vorzugsweise Amino-tris(methylenphosphonsäure) oder Mischungen daraus enthält.

Untersuchungen der Erfinder haben gezeigt, dass insbesondere bei Bauteilen aus Titanlegierungen ausgezeichnete Ergebnisse in deren verbleibenden Oberflächenrauigkeit erhalten werden, wenn die zumindest eine Phosphonsäure in einer Konzentration von 0,1 Gew% bis 10 Gew% enthalten ist.

Von besonderem Vorteil insbesondere bei der Anwendung für 3D-Druckteilen ist, wenn zusätzlich zumindest ein mehrwertiger Alkohol, bevorzugterweise mit zumindest drei, besonders bevorzugt mehr als drei funktionellen Hydroxygruppen und/oder zumindest ein Polyalkohol in dem erfindungsgemäßen Elektrolyten enthalten ist, wobei der Alkohol vorzugsweise aus einer Gruppe gewählt ist, die Glykol, Glyzerin, Polyvinylalkohol, Inositol oder Sorbitol oder Mischungen daraus enthält. Es hat sich gezeigt, dass diese Alkohole als Komplexbildner, Netzmittel und Viskositätsmodifikator den Einebnungseffekt wesentlich beeinflussen. Insbesondere verstärkt sich dieser Effekt mit steigender Anzahl an funktionellen Hydroxygruppen des eingesetzten Alkohols. Auch können Mischungen von verschiedenen Alkoholen zum Einsatz kommen.

Üblicherweise ist der zumindest eine Alkohol in einer Konzentration von bis zu 10 Gew% in dem erfindungsgemäßen Elektrolyten enthalten.

Je nach Oberfläche und Material des zu behandelnden Bauteils sind weitere Zusätze in dem erfindungsgemäßen Elektrolyten enthalten. Hierbei kommen insbesondere weitere Zusätze zum Einsatz, die aus einer Gruppe ausgewählt sind, die Mineralsäuren, insbesondere Phosphorsäure und Schwefelsäure, Fluoride, insbesondere Ammoniumhydrogendifluorid, und Amine, insbesondere Ethanolamine und Isopropanolamine enthält. Hierbei sind die Mineralsäuren üblicherweise in einer Konzentration von bis zu 50 Gew%, die Fluoride in einer Konzentration von bis 20 Gew%, und die Amine in einer Konzentration von bis zu 15 Gew% in dem Elektrolyten enthalten.

Der erfindungsgemäße Elektrolyt wird insbesondere zur Nachbearbeitung von mittels additivem Verfahren aus Metallpulver hergestellten Teilen insbesondere aus Titan- und Aluminiumlegierungen verwendet.

Des Weiteren ist der erfindungsgemäße Elektrolyt insbesondere für ein Elektropolierverfahren für im 3D-Druck hergestellte Bauteile aus Metall geeignet, wobei zumindest ein zu bearbeitender Bauteil als erste Elektrode fungiert und zumindest zweite Elektrode als Gegenelektrode vorgesehen ist, und zumindest ein teilweiser Abtrag eines Bereichs der Bauteiloberfläche in einem Elektrolytbad mit dem erfindungsgemäßen Elektrolyt erfolgt. Hierbei wird erfindungsgemäß der Strom in Form von sich wiederholenden Pulssequenzen angelegt, wobei zumindest ein anodischer Puls vorgesehen ist, dessen Stromstärke im zeitlichen Verlauf einen stetigen Anstieg bis zu einem vorgebbaren Wert aufweist, wobei bevorzugterweise der Anstieg linear, nicht-linear oder exponentiell ist. Somit weist dieser anodische Puls keine wie im Stand der Technik übliche Rechtecksform auf, sondern seine Stromstärke erhöht sich im Zug der Pulsdauer, sodass kein sprunghafter, sondern ein stetiger Anstieg der Stromstärke in Form einer nichtlinearen Flanke oder linearen Rampe über die Pulsdauer erhalten wird.

Die Pulsform, insbesondere die Anstiegs- und gegebenenfalls die Abfallgeschwindigkeit des Stroms sind für den zeitlichen Verlauf der Entstehung und des Abbaus des Polierfilms verantwortlich. Durch gezielte Steuerung des zeitlichen Verlaufs der Pulsflanke kann dieser wesentliche Teil des Polierprozesses optimal durchgeführt werden. Die Kontrolle über den zeitlichen Aufbaus des Polierfilms erlaubt es, die Bereiche Ätzung - Passivierung - Polieren während des Elektropolierens geplant und reproduzierbar zu durchlaufen und damit den Materialabtrag gezielt zu steuern. Bei Metallteilen mit hoher Rauheit kann so durch eine langsam ansteigende Rampe beziehungsweise einen Stufenpuls die Ätzphase verlängert werden und so sowohl die Prozesszeit verkürzt als auch das Ergebnis verbessert werden.

In einer bevorzugten Ausführung der Erfindung weist der Puls anschließend an den Anstieg Mikropulse auf. Dabei werden auf den Puls, dem sogenannten Basispuls, höherfrequente Mikropulse "aufgesetzt". Diese Mikropulse haben den Effekt, dass der Polierprozess beschleunigt wird, weil diese Mikropulse an Spitzen und Kanten aufgrund der Feldlinienkonzentration an diesen Stellen überproportional stark wirken. Des Weiteren wird dadurch die örtliche Stromverteilung über das Werkstück als Funktion der Frequenz der Mikropulse beeinflusst, was wiederum wesentlich für die Glättungswirkung des erfindungsgemäßen Verfahrens ist.

Da die elektrolytische Doppelschichtkapazität auf einer rauen und chemisch inhomogenen Oberfläche, wie sie beispielsweise bei einem 3D-gedruckten Teil üblicherweise vorliegt, lokal unterschiedliche Werte aufweist, ist die Verteilung des Stroms bei höheren Frequenzen anders als bei niedrigen. Der Grund liegt darin, dass der effektive Widerstand einer Kapazität mit steigender Frequenz des angelegten Stroms sinkt, sodass die höherfrequenten Anteile des Strompulses bevorzugt über Stellen mit hoher Kapazität fließen, während der niederfrequente Anteil durch die Bereiche mit niedrigem Polarisationswiderstand fließt. Somit kann die lokale Stromverteilung am Werkstück durch die Pulsform wesentlich beeinflusst werden.

Erfindungsgemäß ist bevorzugterweise vorgesehen, dass sich an dem zumindest einen anodischen zumindest ein zweiter anodischer Puls anschließt, wobei der zumindest zweite Puls gleich oder unterschiedlich von dem ersten Puls ist, und vorzugsweise zumindest zwei aufeinander folgende anodischen Pulse und/oder Pulssequenzen durch eine Pulspause und/oder durch zumindest einen kathodischen Puls unterbrochen werden. Diese Pulssequenzen können gleiche oder unterschiedliche sich wiederholende Pulse aufweisen. Wesentlich hierbei ist, dass zumindest ein anodischer Puls den erfindungsgemäßen stetigen Anstieg aufweist.

In einer weiteren Ausführung der Erfindung kann sich die Pulsfrequenz mit der Dauer des erfindungsgemäßen Verfahrens aufgrund der fortschreitenden Glättung des Bauteils verändern. Die Kontrolle der Frequenz ist hier eine weitere Einflussgröße zur Steuerung der Abtragsgeschwindigkeit bei inhomogener Ausgangsrauigkeit und liegt üblicherweise zwischen 0,2 - 2000 Hz.

Insgesamt ist festzustellen, dass die Steuerung des Strom- bzw. Spannungssignals der Pulse sowie die Kontrolle der Pulslängen, Pulsflanken und Pulspausephasen eine Steuerung der Polierwirkung erlauben. Hierbei beruht die Wirkung der Pulsflanken zu einem Teil auf dem durch die Rampensteilheit kontrollierten zeitlichen Aufbau des wirksamen Polierfilms, andererseits auf dem unterschiedlichen Frequenzspektrum der verwendeten Pulse.

Hierbei ist je nach Anwendung vorgesehen, dass die Pulse eine mittlere Stromdichte von 0,5 A/dm² bis 30 A/dm² und die Pulse und/oder die Pulspausen eine Pulslänge von 0,0005 s bis 5 s aufweisen.

Des Weiteren kann der Elektrolyt zusätzliche Additive, insbesondere Netzmittel, Inhibitoren und/oder Komplexierungsmittel enthalten. Ebenso kann vorgesehen sein, dass der Elektrolyt oder das Werkstück periodisch oder kontinuierlich bewegt wird.

In dem erfindungsgemäßen Verfahren ist insbesondere vorgesehen, dass als Gegenelektroden inerte Kathoden, insbesondere Stahlkathoden oder Edelstahlkathoden eingesetzt werden.

Nachfolgend wird anhand von nicht-einschränkenden Ausführungsbeispielen die Erfindung näher erläutert. Hierin sind die Prozentangaben als Gewichtsprozent zu verstehen, sofern nicht anders angegeben.

In Vorbereitung zur elektrochemischen Nachbearbeitung von 3D-gedruckten Teilen wird in einem ersten Schritt eine mechanische Reinigung, beispielsweise durch Strahlen oder Shotpeening durchgeführt, um lose anhaftendes, beziehungsweise in Hohlräumen und Hinterschneidungen angesammeltes, nicht mit dem Bauteil verbundenes Metallpulver zu entfernen.

Nach diesem Reinigungsschritt wird der Bauteil an einer geeigneten Stelle mechanisch fixiert, elektrisch kontaktiert, in den erfindungsgemäßen Elektrolyten getaucht und anodisch nach einem auf das Material und die Bauteilgeometrie abgestimmten elektrochemischen Verfahren belastet.

Die Konzentrationen der einzelnen Bestandteile des Elektrolyten werden hierbei derart eingestellt, dass eine vordefinierte Endrauigkeit der Bauteiloberfläche erreicht wird.

Der verwendete Strom kann je nach Anforderung Gleichstrom, ein unipolarer Pulsstrom oder ein bipolarer Reverse Pulsstrom sein. Auch die Kombination von unterschiedlichen Verfahren ist möglich.

Die Badtemperatur beträgt zwischen 20°C und 75°C und wird ebenfalls auf das zu behandelnde Werkstück abgestimmt.

Eine Verbesserung der Ergebnisse wird erreicht, wenn eine Bewegung des Elektrolyten durch Pumpen und/oder Rühren vorgesehen ist, um eine effektive Elektrolytumwälzung an jenen Stellen zu erzielen, an denen der größte Abtrag erfolgen soll.

Die Erfindung ist in den unabhängigen Ansprüchen 1, 8 und 10 definiert.

Die folgenden Beispiele 1, 2 und 5 sind daher Vergleichsbeispiele und zeigen nicht die Erfindung.

### Beispiel 1: Nachbehandlung eines 3D-gedruckten Bauteils aus Ti6Al4V

Ein 3D-gedruckter Bauteil für technische Anwendungen aus der Titanlegierung Ti6Al4V wird aus dem 3D-Drucker entnommen, mechanisch vorgereinigt und elektrisch kontaktiert. Anschließend wird der Bauteil in einem Elektrolytbad bestehend aus 98% Methansulfonsäure, 2% Amino-tris(methylenphosphonsäure) und bei einer Temperatur von 50°C, bei einer mittleren Spannung von 20 V und einer mittleren Stromdichte von 12,5 A/dm² mittels Pulsstrom 30 Minuten lang behandelt. Anschließend wird der Bauteil mit entionisiertem Wasser gespült und mittels Pressluft getrocknet.

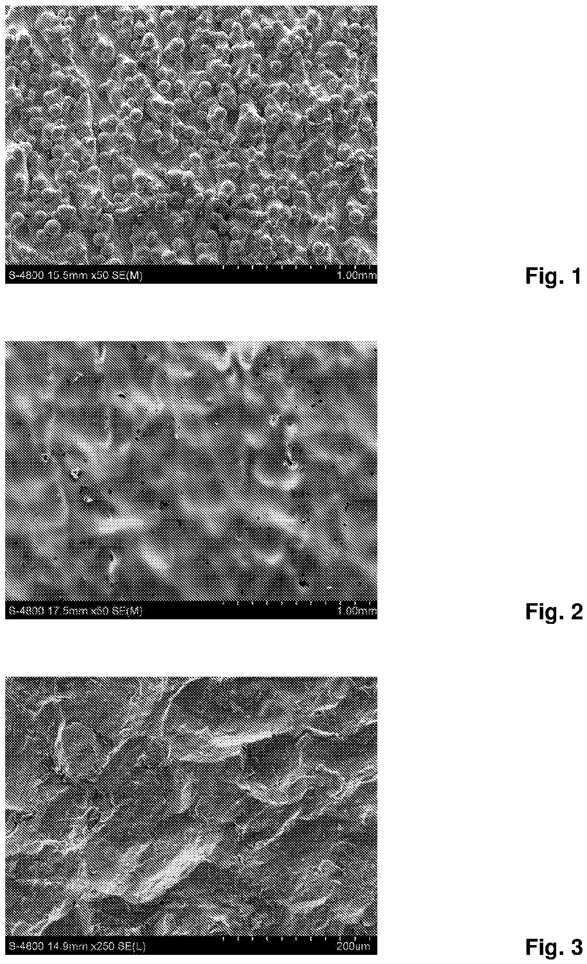

In Fig. 1 ist eine SEM-Aufnahme eines Oberflächenbereichs des Bauteils vor Durchführung des oben beschriebenen erfindungsgemäßen Verfahrens abgebildet. Fig. 2 zeigt diese Oberfläche nach Durchführung des erfindungsgemäßen Verfahrens. Hierbei reduziert sich der Ra-Wert von 15 µm vor auf 3 µm nach der erfindungsgemäßen Nachbehandlung.

### Beispiel 2: Nachbehandlung eines 3D-gedruckten Bauteils aus AlMgSi10

Ein 3D-gedruckter Bauteil aus der hochsiliziumhältigen Legierung AlMgSi10 wird nach einer mechanischen Reinigung und der elektrischen Kontaktierung in einem Elektrolyt bestehend aus 4,4 % Methansulfonsäure, 45,6 % Phosphorsäure, 32,7 % Schwefelsäure, 4,5 % Triethanolamin, 0,4 % Amino-tris(methylenphosphonsäure) und 12,4 % Ammoniumhydrogendifluorid bei einer Spannung von 18 V und einer Stromdichte von 4 A/dm² 40 Minuten lang geglättet. Anschließend wird der Bauteil mit entionisiertem Wasser gespült und mittels Pressluft getrocknet.

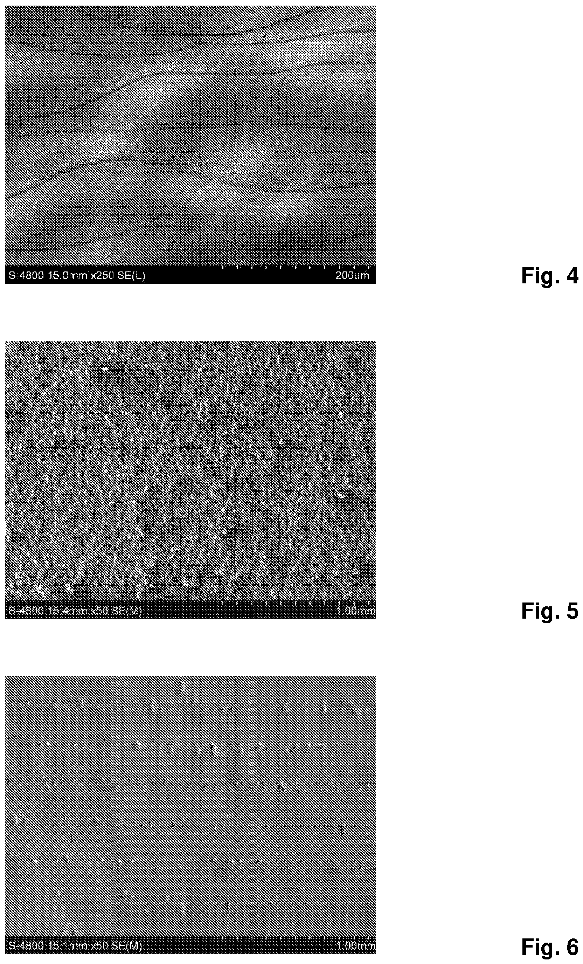

Fig. 3 und Fig. 4 zeigen wiederum eine SEM-Aufnahme der Oberfläche des Bauteils vor beziehungsweise nach Durchführung des erfindungsgemäßen Verfahrens, wobei der ermittelte Ra-Wert von 1,4 µm auf 0,3 µm abnahm.

### Beispiel 3: Nachbehandlung eines 3D-gedruckten Bauteils aus Ti6Al4V

Ein 3D-gedruckter Bauteil für technische Anwendungen aus der Titanlegierung Ti6Al4V wird aus dem 3D-Drucker entnommen, mechanisch vorgereinigt und elektrisch kontaktiert. Anschließend wird der Bauteil in einem Elektrolytbad bestehend aus 98 % Methansulfonsäure, 1,5 % Amino-tris(methylenphosphonsäure) und 0,5 % Inositol bei einer Temperatur von 45°C, bei einer mittleren Spannung von 20 V und einer mittleren Stromdichte von 5 A/dm² mittels Pulsstrom 30 Minuten lang behandelt. Anschließend wird der Bauteil mit entionisiertem Wasser gespült und mittels Pressluft getrocknet.

In Fig. 5 ist die Oberfläche des Bauteils gezeigt, wobei diese einen Ra-Wert von 15 µm aufwies. Nach der Behandlung des Bauteils in der oben beschriebenen Weise nach dem erfindungsgemäßen Verfahren betrug der Ra-Wert lediglich 3 µm. In Fig. 6 ist die Glättung der Oberfläche des erfindungsgemäß behandelten Bauteils augenscheinlich.

### Beispiel 4: Nachbehandlung eines 3D-gedruckten Bauteils aus Ti6Al4V

Ein 3D-gedruckter Bauteil für medizinische Anwendungen wird nach der mechanischen Reinigung und elektrischen Kontaktierung in einem Elektrolyten bestehend aus 90 % Methansulfonsäure, 1,5 % 1-Hydroxyethan-(1,1-diphosphonsäure), 3 % Amino-tris(methylenphosphonsäure) und 5,5 % Glykol bei einer Spannung von 22 V und einer Stromdichte von 10 A/dm² mittels Gleichstrom 60 Minuten lang geglättet. Anschließend wird der Bauteil mit entionisiertem Wasser gespült und mittels Pressluft getrocknet.

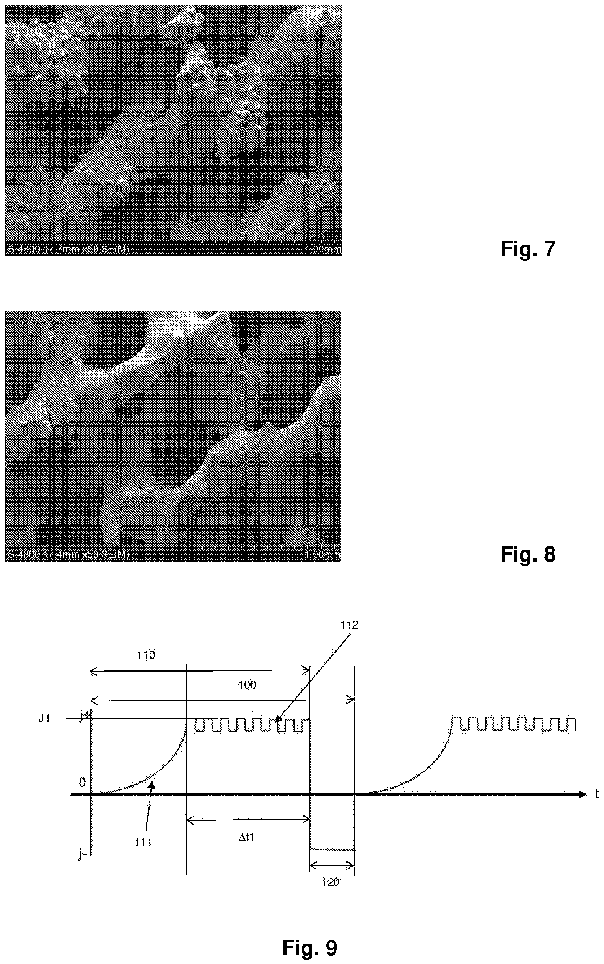

Wie in Fig. 7 in einer SEM-Aufnahme der Oberfläche gezeigt, weist dieser Bauteil eine gitterartige Struktur auf, deren Rauigkeit durch an der Oberfläche anhaftende Pulverrückstände aus dem 3D-Druck verursacht wird. Nach der Behandlung mittels des erfindungsgemäßen Verfahrens sind diese Partikelrückstände praktisch vollständig entfernt (Fig. 8).

In der Fig. 9 ist eine typische Pulssequenz 100 dargestellt, die gemäß der Erfindung aus einem anodischen Puls 110, dessen Stromstärke j+ im zeitlichen Verlauf einen stetigen Anstieg 111 bis zu einem vorgebbaren Wert J1 aufweist. Dieser über eine bestimmte Zeit Δt1 gehaltene anodische Puls 110 wird mit Mikropulsen 112, also Multipulse mit höherer Frequenz, überlagert. An diesen anodischen Puls 110 schließt ein kathodischer Puls 120 in Rechtecksform an.

Diese aus anodischem Puls 110 und kathodischem Puls 120 bestehende Pulssequenz 100 wird solange wiederholt, bis der gewünschte Abtrag und damit verbunden die gewünschte Oberflächengüte erzielt wird. Die Dauer und Höhe des stetigen Anstiegs 111, nämlich der Flanke bzw. Rampe ist von der Ausgangsrauigkeit und der daraus folgenden benötigten Ätzdauer abhängig. Die Anzahl und Höhe der Mikropulse 112 sind materialabhängig.

### Beispiel 5: Glätten eines Bauteils aus einer Titanlegierung (Ti6Al4V)

Der 3D-gedruckte Bauteil mit Ausgangsrauigkeit von Ra = 20 µm aus einer Titanlegierung wird wie folgt behandelt:
- Reinigung des Bauteils, insbesondere Entfetten und Spülen
- Entgraten mittels elektrochemisch unterstütztem Ätzen und erneutes Spülen
- Glättung der Oberfläche des Bauteils mittels erfindungsgemäßen Verfahren:
   Der anodische Puls besteht hierbei aus einer Rampe mit einer Stromdichte von 0 bis 5 A/dm² ansteigend und einem anschließenden Pulsmuster von 5 A/dm² und 20 A/dm² bei einer Frequenz von 2 Hz.
   Der Elektrolyt besteht aus:
      98% Methansulfonsäure
      1% Amino-tris(methylenphosphonsäure)
      1% Wasser
   Die Temperatur des Elektrolytbades liegt bei 50°C
- Spülen
- Trocknen

Die Rauigkeit des bearbeiteten Bauteils reduziert sich durch diese Oberflächenbehandlung auf Ra = 1,8 µm. Die resultierenden Oberflächen erfüllen die Anforderung hinsichtlich der Oberflächenrauigkeit für die gegebene Anwendung, eine weitere Bearbeitung ist dafür nicht erforderlich. Je nach Einsatz kann jedoch eine weitere Funktionalisierung der Oberfläche erfolgen.

## Patentansprüche

1. Elektrolyt zum Elektropolieren von Metalloberflächen, wobei der Elektrolyt Methansulfonsäure, zumindest eine Phosphonsäure und zumindest einen mehrwertigen Alkohol und/oder zumindest einen Polyalkohol umfasst.

2. Elektrolyt nach Anspruch 1, **dadurch gekennzeichnet, dass** die Phosphonsäure aus einer Gruppe gewählt ist, die aus Mono-, Di-, und/oder Polyphosphonsäuren, vorzugsweise Amino-tris(methylenphosphonsäure) oder Mischungen daraus besteht.

3. Elektrolyt nach Anspruch 1 oder 2, **dadurch gekennzeichnet, dass** die zumindest eine Phosphonsäure in einer Konzentration von 0,1 Gew% bis 10 Gew% enthalten ist.

4. Elektrolyt nach einem der Ansprüche 1 bis 3, **dadurch gekennzeichnet, dass** der Polyalkohol aus einer Gruppe gewählt ist, die aus Glykol, Glyzerin, Polyvinylalkohol, Inositol oder Sorbitol oder Mischungen daraus besteht.

5. Elektrolyt nach Anspruch 4, **dadurch gekennzeichnet, dass** der zumindest eine Alkohol in einer Konzentration von bis 10 Gew% enthalten ist.

6. Elektrolyt nach einem der Ansprüche 1 bis 5, **dadurch gekennzeichnet, dass** weitere Zusätze enthalten sind, die aus einer Gruppe ausgewählt sind, die aus
Mineralsäuren, insbesondere Phosphorsäure und Schwefelsäure in einer Konzentration von jeweils bis zu 50 Gew%,
Fluoriden, insbesondere Ammoniumdifluorid in einer Konzentration von bis 20 Gew%, und
Aminen, insbesondere Ethanolamine und Isopropanolamine in einer Konzentration von bis zu 15 Gew% besteht.

7. Elektrolyt nach einem der Ansprüche 1 bis 6, **dadurch gekennzeichnet, dass** der Elektrolyt zusätzliche Additive, insbesondere Netzmittel, Inhibitoren und/oder Komplexierungsmittel enthält.

8. Verwendung eines Elektrolyten nach einem der Ansprüche 1 bis 7 in einem elektrochemischen Oberflächenverfahren zur Nachbearbeitung von mittels additivem Verfahren aus Metallpulver hergestellten Teilen, insbesondere aus Titan- und Aluminiumlegierungen.

9. Verwendung eines Elektrolyten nach Anspruch 8, **dadurch gekennzeichnet, dass** die Nachbearbeitung in dem Elektrolyten mittels Gleichstrom, Wechselstrom, gepulstem Strom oder Pulse-Reverse-Strom erfolgt.

10. Elektropolierverfahren, insbesondere für im 3D-Druck hergestellte Bauteile aus Metall, wobei zumindest ein zu bearbeitender Bauteil als erste Elektrode fungiert und zumindest zweite Elektrode als Gegenelektrode vorgesehen ist, und zumindest ein teilweiser Abtrag eines Bereichs der Bauteiloberfläche in einem Elektrolytbad mit einem Elektrolyt nach einem der Ansprüche 1 bis 7 durch Anlegen von Strom an dem Bauteil erfolgt, **dadurch gekennzeichnet, dass** der Strom in Form von sich wiederholenden Pulssequenzen (100) angelegt wird, wobei zumindest ein anodischer Puls (110) vorgesehen ist, dessen Stromstärke (j+) im zeitlichen Verlauf (t) einen stetigen Anstieg (111) bis zu einem vorgebbaren Wert (Jl) aufweist.

11. Verfahren nach Anspruch 10, **dadurch gekennzeichnet, dass** der Anstieg (111) linear, nicht-linear oder exponentiell ist.

12. Verfahren nach Anspruch 10 oder 11, **dadurch gekennzeichnet, dass** anschließend an den Anstieg (111) der anodische Puls (110) Mikropulse (112) aufweist.

13. Verfahren nach einem der Ansprüche 10 bis 12, **dadurch gekennzeichnet, dass** sich an dem zumindest einen anodischen Puls (110) zumindest ein zweiter Puls (120) anschließt, wobei der zumindest zweite Puls (120) vorzugsweise unterschiedlich von dem ersten Puls (110) ist, und der zumindest erste Puls und der zumindest zweite Puls eine sich wiederholende Pulssequenz (100) bilden, die bevorzugterweise durch eine Pulspause und/oder durch zumindest einen kathodischen Puls (120) unterbrochen werden.

14. Verfahren nach einem der Ansprüche 10 bis 13, **dadurch gekennzeichnet, dass** die Pulse (110, 120) eine mittlere Stromdichte von 0,5 A/dm² bis 30 A/dm² aufweisen.

15. Verfahren nach einem der Ansprüche 10 bis 14, **dadurch gekennzeichnet, dass** die Pulse (110, 120) und/oder die Pulspausen eine Pulslänge von 0,0005 s bis 5 s aufweisen.

## Claims

1. An electrolyte for electropolishing metal surfaces, wherein the electrolyte comprises methanesulfonic acid, at least one phosphonic acid und at least one polyvalent alcohol and/or at least one polyalcohol.

2. An electrolyte according to claim 1, **characterized in that** the phosphonic acid is selected from a group comprising mono-, di- and/or polyphosphonic acids, preferably amino-tris(methylenephosphonic acid) or mixtures thereof.

3. An electrolyte according to claim 1 or 2, **characterized in that** the at least one phosphonic acid is contained at a concentration of from 0.1% by weight to 10% by weight.

4. An electrolyte according to any of claims 1 to 3, **characterized in that** the least one polyalcohol is selected from a group comprising glycol, glycerin, polyvinyl alcohol, inositol or sorbitol or mixtures thereof.

5. An electrolyte according to claim 4, **characterized in that** the at least one alcohol is contained at a concentration of up to 10% by weight.

6. An electrolyte according to any of claims 1 to 5, **characterized in that** further additives are contained which are selected from a group comprising
mineral acids, in particular phosphoric acid and sulfuric acid at a concentration of, in each case, up to 50% by weight,
fluorides, in particular ammonium difluoride at a concentration of up to 20% by weight, and
amines, in particular ethanolamines and isopropanolamines at a concentration of up to 15% by weight.

7. An electrolyte according to any of claims 1 to 6, **characterized in that** the electrolyte contains additional additives, in particular wetting agents, inhibitors and/or complexing agents.

8. Use of an electrolyte according to any of claims 1 to 7 in an electrochemical surface method for the post-processing of parts made of metal powder by means of an additive method, in particular of titanium alloys and aluminium alloys.

9. Use of an electrolyte according to claim 8, **characterized in that** the post-processing occurs in the electrolyte by means of direct current, alternating current, pulsed current or pulse reverse current.

10. An electropolishing method, in particular for metal components produced in 3D printing, wherein at least one component to be processed functions as a first electrode and at least one second electrode is provided as a counter electrode, and at least a partial removal of a portion of the component surface occurs in an electrolyte bath with an electrolyte according to any of claims 1 to 7 by applying current to the component, **characterized in that** the current is applied in the form of repeating pulse sequences (100), wherein at least one anodic pulse (110) is provided, the current intensity (j+) of which displays a steady increase (111) over the course of time (t) up to a specifiable value (Jl).

11. A method according to claim 10, **characterized in that** the increase (111) is linear, nonlinear or exponential.

12. A method according to claim 10 or 11, **characterized in that** the anodic pulse (110) displays micropulses (112) subsequent to the increase (111).

13. A method according to any of claims 10 to 12, **characterized in that** at least one second pulse (120) adjoins the at least one anodic pulse (110), wherein the at least second pulse (120) is preferably different from the first pulse (110), and the at least first pulse and the at least second pulse form a repeating pulse sequence (100), which is preferably interrupted by a pulse pause and/or by at least one cathodic pulse (120).

14. A method according to any of claims 10 to 13, **characterized in that** the pulses (110, 120) have an average current density of 0.5 A/dm² to 30 A/dm².

15. A method according to any of claims 10 to 14, **characterized in that** the pulses (110, 120) and/or the pulse pauses have a pulse length of 0.0005 s to 5 s.

## Revendications

1. Electrolyte pour le polissage électrolytique de surfaces métalliques, l'électrolyte comprenant de l'acide méthanesulfonique, au moins un acide phosphonique et au moins un alcool polyhydrique et/ou au moins un polyalcool.

2. Electrolyte selon la revendication 1, **caractérisé en ce que** l'acide phosphonique est choisi dans un groupe constitué par les acides mono-, di- et/ou polyphosphoniques, de préférence l'acide aminotri(méthylènephosphonique) ou des combinaisons de ceux-ci.

3. Electrolyte selon la revendication 1 ou 2, **caractérisé en ce que** ledit au moins un acide phosphonique est présent à une concentration de l'ordre de 0,1 % en poids à 10 % en poids.

4. Electrolyte selon l'une quelconque des revendications 1 à 3, **caractérisé en ce que** le polyalcool est choisi dans un groupe constitué par le glycol, le glycérol, l'alcool polyvinylique, l'inositol ou le sorbitol ou des combinaisons de ceux-ci.

5. Electrolyte selon la revendication 4, **caractérisé en ce que** ledit au moins un alcool est présent à une concentration pouvant atteindre 10 % en poids.

6. Electrolyte selon l'une quelconque des revendications 1 à 5, **caractérisé en ce que** d'autres additifs choisis dans un groupe constitué par les acides minéraux, en particulier l'acide phosphorique et l'acide sulfurique, à une concentration allant respectivement jusqu'à 50 % en poids, les fluorures, en particulier le difluorure d'ammonium, à une concentration pouvant atteindre 20 % en poids, et les amines, en particulier les éthanolamines et les isopropanolamines, à une concentration pouvant atteindre 15 % en poids, sont présents.

7. Electrolyte selon l'une quelconque des revendications 1 à 6, **caractérisé en ce que** l'électrolyte contient des additifs supplémentaires, en particulier des agents mouillants, des inhibiteurs et/ou des agents complexants.

8. Utilisation d'un électrolyte selon l'une quelconque des revendications 1 à 7 dans un procédé de traitement électrochimique de surface pour le post-traitement de pièces fabriquées à partir de poudre métallique au moyen d'un procédé à additifs, en particulier à partir d'alliages de titane et d'aluminium.

9. Utilisation d'un électrolyte selon la revendication 8, **caractérisée en ce que** le post-traitement dans l'électrolyte est réalisé par courant continu, courant alternatif, courant pulsé ou courant pulsé inversé

10. Procédé de polissage électrolytique, en particulier de pièces métalliques fabriqués en impression 3D, dans lequel au moins une pièce à traiter fait office de de première électrode et au moins une seconde électrode est prévue en tant que contre-électrode, et au moins un enlèvement partiel d'une couche superficielle de la pièce est réalisé dans un bain électrolytique en utilisant un électrolyte selon l'une quelconque des revendications 1 à 7 par application de courant sur la pièce, **caractérisé en ce que** le courant est appliqué sous la forme de séquences répétitives d'impulsions (100), au moins une impulsion anodique (110) étant prévue dont l'intensité (j+) présente au cours du temps (t) une augmentation (111) constante jusqu'à une valeur (J1) qui peut être prédéterminée.

11. Procédé selon la revendication 10, **caractérisé en ce que** l'augmentation (111) est linéaire, non linéaire ou exponentielle

12. Procédé selon la revendication 10 ou 11, **caractérisé en ce que** l'impulsion anodique (110) présente des micro-impulsions (112) à la suite de l'augmentation (111).

13. Procédé selon l'une quelconque des revendications 10 à 12, **caractérisé en ce que** ladite au moins une impulsion anodique (110) est suivie d'au moins une seconde impulsion (120), ladite au moins une seconde impulsion (120) étant de préférence différente de la première impulsion (110), et la première impulsion et ladite au moins seconde impulsion formant une séquence d'impulsions répétitives (100) qui sont de préférence interrompues par une pause et/ou par au moins une impulsion cathodique (120).

14. Procédé selon l'une quelconque des revendications 10 à 13, **caractérisé en ce que** les impulsions (110, 120) présentent une densité moyenne de courant de l'ordre de 0,5 A/dm² à 30 A/dm².

15. Procédé selon l'une quelconque des revendications 10 à 14, **caractérisé en ce que** les impulsions (110, 120) et/ou les pauses d'impulsion présentent une durée d'impulsion de l'ordre de 0,0005 s à 5 s.
